# EUROPÄISCHE PATENTSCHRIFT

(11) **EP 4 080 666 B1**
(45) Veröffentlichungstag und Bekanntmachung des Hinweises auf die Patenterteilung: **22.11.2023**
(21) Anmeldenummer: 22163765.5
(22) Anmeldetag: 23.03.2022
(51) Int. Cl.: H01M 50/522, H01M 50/521, H01M 50/502

(54) **BATTERIEMODULVERBINDER, VERFAHREN ZUM HERSTELLEN EINES BATTERIEMODULVERBINDERS UND BATTERIESYSTEM**
BATTERY MODULE CONNECTOR, METHOD FOR PRODUCING A BATTERY MODULE CONNECTOR AND BATTERY SYSTEM
CONNECTEUR DE MODULE DE BATTERIE, PROCÉDÉ DE FABRICATION D'UN CONNECTEUR DE MODULE DE BATTERIE ET SYSTÈME DE BATTERIE

(30) Priorität: 20.04.2021 DE 102021109918
(43) Veröffentlichungstag der Anmeldung: 26.10.2022
(73) Patentinhaber: Lisa Dräxlmaier GmbH, 84137 Vilsbiburg (DE)
(72) Erfinder: Dobos, Leonard, 84175 Gerzen (DE)

(56) Entgegenhaltungen:
- WO-A1-2015/118974
- DE-A1-102010 034 686
- DE-A1-102019 134 403
- JP-A- 2015 041 532

## Beschreibung

### Technisches Gebiet

Die vorliegende Erfindung betrifft einen Batteriemodulverbinder, ein Verfahren zum Herstellen eines solchen Batteriemodulverbinders sowie ein Batteriesystem.

### Stand der Technik

Der Abstand zwischen einzelnen Batteriemodulen eines Batteriesystems, etwa einer Antriebsbatterie für ein Elektrofahrzeug, kann fertigungsbedingt um einige Millimeter schwanken. Auch kann sich der Abstand im Betrieb aufgrund thermischer und/oder mechanischer Belastungen weiter ändern. Dementsprechend kann es bei der Verwendung starrer Batteriemodulverbinder, wie etwa von Kupferblöcken, zu einer starken mechanischen Beanspruchung der Batteriemodulverbinder und/oder der damit verbundenen Batteriemodule kommen.

Batteriemodulverbinder aus dem Stand der Technik, welche federelastische Elemente oder bandförmige Drahtgeflechte umfassen, sind beispielsweise in der DE 10 2010 034686 A1, DE 10 2019 134403 A1, WO 2015/118974 A1 oder JP 2015 041532 A offenbart.

### Beschreibung der Erfindung

Es ist eine Aufgabe der Erfindung, die elektrische Kontaktierung zweier Batteriemodule zu verbessern. Insbesondere ist es die Aufgabe der Erfindung, einen in Längsrichtung flexiblen Batteriemodulverbinder bereitzustellen, der eine sichere elektrische Kontaktierung ermöglicht.

Diese Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben. Insbesondere können die unabhängigen Ansprüche einer Anspruchskategorie auch analog zu den abhängigen Ansprüchen einer anderen Anspruchskategorie weitergebildet sein.

Der im Folgenden beschriebene Ansatz beruht im Wesentlichen darauf, dass ein Batteriemodulverbinder mit einem flexiblen Drahtgeflecht realisiert werden kann. Damit können Abstandsschwankungen von mehreren Millimetern, insbesondere von mehr als plus/minus drei Millimetern, ausgeglichen werden. Somit kann die mechanische Beanspruchung des Batteriemodulverbinders und der damit verbundenen Batteriemodule erheblich reduziert werden. Um zu verhindern, dass sich Lücken zwischen den Drähten des Drahtgeflechts bilden, etwa beim Stauchen des Drahtgeflechts, können die Drähte mittels Federkraft gegeneinandergedrückt werden. Somit kann eine sichere Kontaktierung gewährleistet werden. Insbesondere kann dadurch eine übermäßige Erwärmung des Drahtgeflechts vermieden werden.

Ein erster Aspekt der Erfindung betrifft einen Batteriemodulverbinder zum elektrisch leitfähigen Verbinden zweier Batteriemodule. Der Batteriemodulverbinder umfasst ein erstes Kontaktelement zum elektrisch leitfähigen Kontaktieren eines ersten Batteriemoduls, ein zweites Kontaktelement zum elektrisch leitfähigen Kontaktieren eines zweiten Batteriemoduls, ein bandförmiges Drahtgeflecht, das an seinem ersten Ende mit dem ersten Kontaktelement und an seinem zweiten Ende mit dem zweiten Kontaktelement elektrisch leitfähig verbunden ist, und mindestens ein Federelement, das in einen Abschnitt des Drahtgeflechts zwischen dem ersten Ende und dem zweiten Ende eingefügt ist und ausgebildet ist, um den Abschnitt derart mit einer Federkraft zu beaufschlagen, dass der Abschnitt radial zu einer Längsachse des Drahtgeflechts aufgedehnt wird.

Die Batteriemodule können Komponenten eines Batteriesystems sein. Die Batteriemodule können über einen oder mehrere Batteriemodulverbinder miteinander in Reihe und/oder parallelgeschaltet sein.

Bei dem Batteriesystem kann es sich beispielsweise um eine Hochvoltbatterie mit einer Nennspannung von mindestens 300 V, insbesondere von mindestens 400 V, handeln. In diesem Kontext kann der Batteriemodulverbinder auch als Hochvoltverbinder bezeichnet werden.

Beispielsweise kann das Batteriesystem eine Antriebsbatterie für ein Elektrofahrzeug wie etwa ein Elektroauto, Elektrolastwagen, Elektrobus oder Elektrozweirad sein. Möglich sind aber auch andere Anwendungen des Batteriesystems.

Insbesondere kann das Batteriesystem als Lithium-Ionen-Akkumulator ausgeführt sein, etwa in Form eines Lithium-Polymer-Akkumulators oder eines Lithium-Eisenphosphat-Akkumulators. Denkbar sind aber auch andere Ausführungsformen des Batteriesystems.

Jedes Batteriemodul kann eine Mehrzahl von Batteriezellen umfassen. Zusätzlich zu den Batteriezellen kann das Batteriemodul eine Sensorik zum Messen einer Spannung, eines Stroms und/oder einer Temperatur der Batteriezellen und/oder eine Steuerelektronik zum Beeinflussen einer Spannung, eines Stroms und/oder einer Temperatur der Batteriezellen umfassen. Das Batteriemodul kann ferner ein Modulgehäuse zum Aufnehmen der Batteriezellen, der Sensorik und/oder der Steuerelektronik umfassen.

Unter einer Batteriezelle kann im Allgemeinen eine galvanische Zelle zur Umwandlung zwischen chemischer und elektrischer Energie verstanden werden. Hierzu kann die Batteriezelle zwei Elektroden und einen Elektrolyten umfassen. Die Batteriezellen können beispielsweise als prismatische Zellen und/oder als sogenannte Pouch-Zellen mit beutel- oder taschenartiger Außenhülle ausgeführt sein. Die Batteriezellen können miteinander in Reihe und/oder parallelgeschaltet sein.

Unter einem Drahtgeflecht kann ein durch Verflechten mehrerer Drähte hergestelltes flexibles Band, etwa in Zopf- und/oder Schlauchform, verstanden werden. Beispielsweise kann das Drahtgeflecht aus mehreren Drahtsträngen geflochten sein, wobei jeder Drahtstrang, auch Litze genannt, aus mehreren Einzeldrähten hergestellt sein kann. Das Drahtgeflecht kann beispielsweise aus Kupferdrähten geflochten sein. Denkbar sind aber auch andere Drahtmaterialien.

Bei dem ersten bzw. zweiten Kontaktelement kann es sich beispielsweise um einen Kupferblock handeln. Die Kontaktelemente können aus dem gleichen Material wie das Drahtgeflecht oder aus einem anderen Material als das Drahtgeflecht hergestellt sein. Die Kontaktelemente können stoff- und/oder kraftschlüssig mit den jeweiligen Enden des Drahtgeflechts verbunden sein, beispielsweise durch Löten und/oder Schweißen. Beispielsweise können die Kontaktelemente als Schraubterminals ausgeführt sein. Möglich sind aber auch andere, dem Fachmann geläufige Ausführungsformen der Kontaktelemente.

Das Federelement kann beispielsweise in das Drahtgeflecht eingeschoben und/oder eingeflochten sein.

Im einfachsten Fall kann das Federelement beispielsweise als Rohr ausgeführt sein. Der Außendurchmesser des Rohrs kann so gewählt sein, dass das Drahtgeflecht durch Einfügen des Rohrs in das Drahtgeflecht mit einer gewissen Federkraft aufgedehnt wird. Das Rohr kann aus Kunststoff und/oder Metall gefertigt sein.

Alternativ kann das Federelement beispielsweise als rohr- oder schlauchförmiges Gittergeflecht ähnlich einem Stent in der Medizintechnik ausgeführt sein.

Als weitere Alternative kann das Federelement als Blattfederelement mit zwei gegeneinander montierten Blattfedern ausgeführt sein, auch Elliptikfeder genannt.

Das Federelement kann ausgebildet sein, um das Drahtgeflecht derart mit der Federkraft zu beaufschlagen, dass das Drahtgeflecht zumindest abschnittsweise leicht ausgebeult wird. Dadurch wird insgesamt eine Straffung des Drahtgeflechts bewirkt, d. h., es kann verhindert werden, dass sich beim Stauchen des Drahtgeflechts Lücken zwischen den einzelnen Drähten oder Drahtsträngen des Drahtgeflechts bilden. Somit kann zum einen das Risiko einer übermäßigen Erwärmung des Drahtgeflechts und/oder einer Funkenbildung zwischen den einzelnen Drähten und/oder Drahtsträngen erheblich gesenkt werden. Zum anderen kann somit eine übermäßige Zugbeanspruchung des Drahtgeflechts vermieden werden.

Die Federkraft kann in Abhängigkeit von einer zu erreichenden Längenausgleichstoleranz gewählt sein. Die Längenausgleichstoleranz kann beispielsweise mindestens plus/minus 3 mm betragen. Möglich sind aber auch Längenausgleichstoleranzen von mindestens plus/minus 10 mm. Die Federkraft sollte so gewählt sein, dass das Drahtgeflecht beim Stauchen nicht übermäßig aufgelockert wird. Andererseits sollte die Federkraft so gewählt sein, dass die einzelnen Drähten oder Drahtstränge des Drahtgeflechts beim Strecken nicht übermäßig oder möglichst nur in sehr geringem Ausmaß auf Zug belastet werden.

Mit anderen Worten kann mittels des Federelements sichergestellt werden, dass die Drähte und/oder Drahtstränge des Drahtgeflechts beim Strecken und/oder Stauchen des Drahtgeflechts innerhalb eines zulässigen Toleranzbereichs stets eng paketiert aneinanderliegen. Vorteilhaft ist zudem, dass der zulässige Toleranzbereich im Vergleich zu Ausführungsformen ohne ein solches Federelement deutlich größer gewählt werden kann, beispielsweise größer als plus/minus 3 mm, vorzugsweise größer als plus/minus 10 mm. Somit können Beschädigungen des Batteriemodulverbinders und/oder der damit verbundenen Batteriemodule bei der Montage und/oder im Betrieb vermieden werden, ohne dass dafür funktionale Einschränkungen in Kauf genommen werden müssten. Auch kann der Fertigungsaufwand bei der Positionierung und/oder Fixierung der Batteriemodule deutlich reduziert werden.

Ein zweiter Aspekt der Erfindung betrifft ein Batteriesystem, das mindestens ein erstes Batteriemodul und ein zweites Batteriemodul sowie mindestens einen Batteriemodulverbinder gemäß einer Ausführungsform des ersten Aspekts der Erfindung umfasst. Dabei sind das erste Batteriemodul und das zweite Batteriemodul über den Batteriemodulverbinder elektrisch leitfähig miteinander verbunden. Ein solches Batteriesystem kann aufgrund der vereinfachten elektrischen Kontaktierung der Batteriemodule einfach und kostengünstig hergestellt werden.

Ein dritter Aspekt der Erfindung betrifft ein Verfahren zum Herstellen eines Batteriemodulverbinders gemäß einer Ausführungsform des ersten Aspekts der Erfindung. Das Verfahren umfasst zumindest die folgenden Schritte, die vorzugsweise in der angegebenen Reihenfolge ausgeführt werden können: Herstellen des bandförmigen Drahtgeflechts durch Verflechten mehrerer Drähte, wobei das mindestens eine Federelement beim Verflechten der Drähte in das Drahtgeflecht eingefügt wird, und elektrisch leitfähiges Verbinden des Drahtgeflechts an seinem ersten Ende mit dem ersten Kontaktelement und an seinem zweiten Ende mit dem zweiten Kontaktelement.

Anders ausgedrückt kann das Federelement bereits bei der Herstellung des Drahtgeflechts in einen Abschnitt zwischen dem ersten Ende und dem zweiten Ende des Drahtgeflechts eingefügt werden. Beispielsweise kann das Federelement beim Herstellen des Drahtgeflechts zumindest abschnittweise von den Drähten umflochten und/oder mit den Drähten verflochten werden. Somit kann ein zusätzlicher Schritt zum Einfügen des Federelements in das (fertige) Drahtgeflecht entfallen.

Es ist möglich, dass das Federelement beim Herstellen des Drahtgeflechts hergestellt wird. Beispielsweise kann das Federelement ähnlich wie das Drahtgeflecht aus Drähten und/oder Kunststofffasern geflochten werden, etwa zu einem rohrförmigen Gittergeflecht, das auch als Stent bezeichnet werden kann. Anders ausgedrückt können das Drahtgeflecht und das Federelement jeweils in ein und demselben Herstellungsschritt hergestellt werden.

Merkmale des Verfahrens gemäß einer Ausführungsform des dritten Aspekts der Erfindung können auch Merkmale des Batteriemodulverbinders sein und umgekehrt.

Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Gemäß einer Ausführungsform ist das Federelement als Rohr ausgeführt. Das Rohr kann ein Kunststoff- oder Metallrohr oder eine Kombination aus beidem sein. Ein solches rohrförmiges Federelement kann kostengünstig hergestellt werden und mit geringem Aufwand in das Drahtgeflecht eingefügt werden, beispielsweise durch Einschieben in ein offenes Ende des Drahtgeflechts oder zwischen einzelne Drahtstränge des Drahtgeflechts.

Gemäß einer Ausführungsform ist das Federelement als rohrförmiges Gittergeflecht zum Beaufschlagen des Abschnitts mit der Federkraft ausgeführt. Das Gittergeflecht kann aus Drähten und/oder Kunststofffasern geflochten sein. Das Gittergeflecht kann beispielsweise ähnlich einem Stent ausgeführt sein. Damit kann das Federelement besonders kompakt und flexibel ausgeführt werden.

Gemäß einer Ausführungsform umfasst das Federelement zwei einander gegenüberliegend angeordnete Blattfedern zum Beaufschlagen des Abschnitts mit der Federkraft. Die Blattfedern können aus Metall und/oder Kunststoff hergestellt sein. Das Drahtgeflecht kann sich in Umfangsrichtung zumindest teilweise um die Blattfedern erstrecken. Dabei können die Blattfedern ausgebildet sein, um das Drahtgeflecht in entgegengesetzte radiale Richtungen mit der Federkraft zu beaufschlagen. Auch durch diese Ausführungsform kann eine dauerhafte Straffung des Drahtgeflechts, insbesondere im gestauchten Zustand des Drahtgeflechts, gewährleistet werden.

Gemäß einer Ausführungsform ist das Drahtgeflecht schlauchförmig ausgeführt. Mit anderen Worten kann das Drahtgeflecht als länglicher, flexibler Hohlkörper mit mindestens einem offenen Ende ausgeführt sein. Dabei kann das Federelement über das offene Ende in das Drahtgeflecht eingeschoben worden sein. Dies ermöglicht eine einfache Herstellung des Batteriemodulverbinders.

Gemäß einer Ausführungsform sind mehrere Federelemente in unterschiedliche Abschnitte des Drahtgeflechts zwischen dem ersten Ende und dem zweiten Ende eingefügt und ausgebildet, um die unterschiedlichen Abschnitte derart mit einer Federkraft zu beaufschlagen, dass die unterschiedlichen Abschnitte radial zur Längsachse des Drahtgeflechts aufgedehnt werden. Die Federelemente unterschiedlicher Abschnitte können identische oder unterschiedliche Federeigenschaften aufweisen. Damit kann die Flexibilität des Drahtgeflechts erhöht werden, was insbesondere bei längeren Ausführungen des Drahtgeflechts von Vorteil ist.

### Kurze Figurenbeschreibung

Nachfolgend wird ein vorteilhaftes Ausführungsbeispiel der Erfindung unter Bezugnahme auf die begleitenden Figuren erläutert. Es zeigen:
- Figur 1a: ein Batteriesystem gemäß einem Ausführungsbeispiel der Erfindung.
- Figur 1b: eine Querschnittsansicht eines Batteriemodulverbinders aus Figur 1a.
- Figur 2: ein Federelement für einen Batteriemodulverbinder gemäß einem Ausführungsbeispiel der Erfindung.
- Figur 3: einen Abschnitt eines Batteriemodulverbinders gemäß einem Ausführungsbeispiel der Erfindung.

Die Figuren sind lediglich schematische Darstellungen und dienen nur der Erläuterung der Erfindung. Gleiche oder gleichwirkende Elemente sind durchgängig mit den gleichen Bezugszeichen versehen.

### Detaillierte Beschreibung

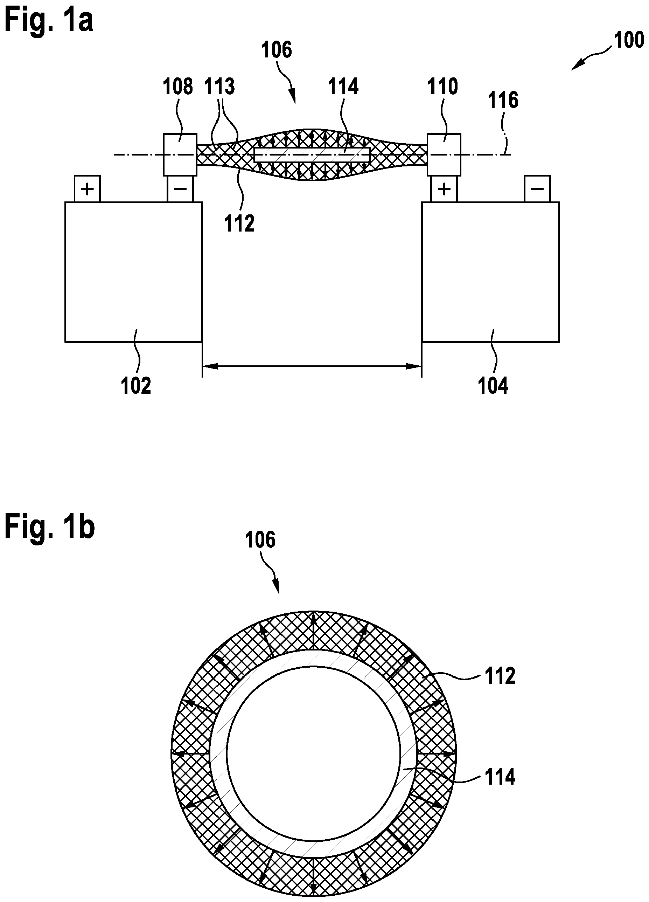

Figur 1a zeigt schematisch ein Batteriesystem 100, das ein erstes Batteriemodul 102 und ein zweites Batteriemodul 104 umfasst. Jedes der Batteriemodule 102, 104 weist einen Pluspol ("+") und einen Minuspol ("-") zur elektrischen Kontaktierung auf. In diesem Beispiel sind die beiden Batteriemodule 102, 104 über einen Batteriemodulverbinder 106 miteinander in Reihe geschaltet.

Bei den Batteriemodulen 102, 104 kann es sich beispielsweise um Hochvolt-Lithium-Ionen-Akkumulatoren handeln.

Der Batteriemodulverbinder 106 umfasst ein erstes Kontaktelement 108, das mit dem Minuspol des ersten Batteriemoduls 102 elektrisch leitfähig verbunden ist, und ein zweites Kontaktelement 110, das mit dem Pluspol des zweiten Batteriemoduls 104 elektrisch leitfähig verbunden ist. Beispielsweise können die Kontaktelemente 108, 110 mit dem jeweiligen Minus- bzw. Pluspol verschraubt sein.

Die Kontaktelemente 108, 110 können beispielsweise jeweils als Kupferblock ausgeführt sein. Möglich sind aber auch andere, dem Fachmann geläufige Ausführungsformen der Kontaktelemente 108, 110.

Des Weiteren umfasst der Batteriemodulverbinder 106 ein bandförmiges Drahtgeflecht 112, das aus mehreren Einzeldrähten 113, insbesondere aus Kupferdrähten, geflochten ist. Beispielsweise kann das Drahtgeflecht 112 zopf- und/oder schlauchförmig geflochten sein.

Die beiden Kontaktelemente 108, 110 sind über das Drahtgeflecht 112 elektrisch leitfähig miteinander verbunden. Hierzu kann das Drahtgeflecht 112 beispielsweise an seinem ersten Ende mit dem ersten Kontaktelement 108 und an seinem zweiten Ende mit dem zweiten Kontaktelement 110 verschweißt und/oder verlötet sein. Denkbar ist aber auch eine kraft- und/oder formschlüssige Verbindung der beiden Kontaktelemente 108, 110 mit dem Drahtgeflecht 112.

In einen zwischen den beiden Kontaktelementen 108, 110 befindlichen Abschnitt des Drahtgeflechts 112 ist ein Federelement 114 eingefügt. Das Federelement 114 kann ausgebildet sein, um das Drahtgeflecht 112 relativ zu dessen Längsachse 116 flächig mit einer radial nach außen gerichteten Federkraft zu beaufschlagen (markiert mit mehreren kleinen Pfeilen), sodass eine leichte Ausbeulung des Drahtgeflechts 112 bewirkt wird. Dadurch werden die Einzeldrähte 113 gegeneinandergedrückt, d. h. relativ zueinander fixiert. Somit kann beispielsweise bei einer Stauchung des Drahtgeflechts 112, etwa aufgrund fertigungs- und/oder betriebsbedingter Schwankungen eines horizontalen Abstands zwischen den beiden Batteriemodulen 102, 104 (angedeutet mit einem Doppelpfeil), verhindert werden, dass sich Lücken, d. h. mögliche Kriechstrecken, zwischen den Einzeldrähten 113 bilden.

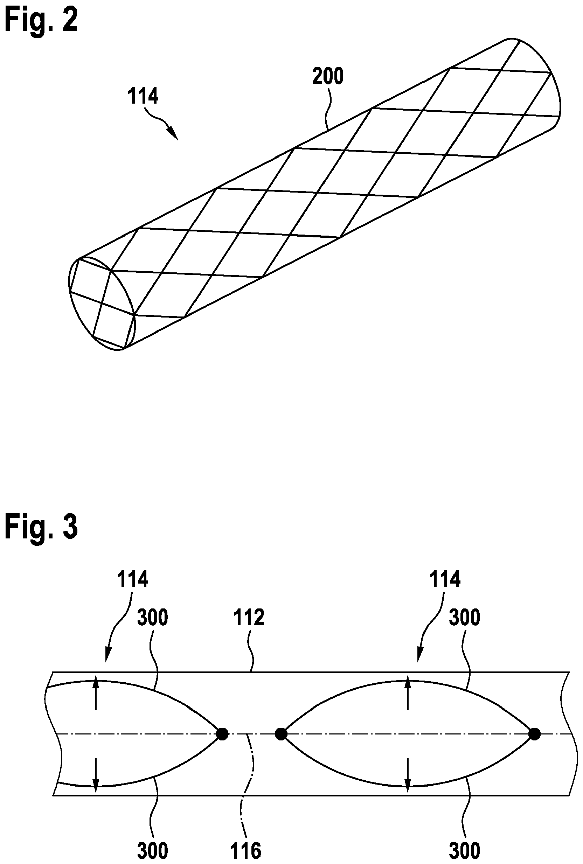

Figur 1b zeigt den Batteriemodulverbinder 106 im Querschnitt. Dabei ist zu erkennen, dass das Federelement 114 das Drahtgeflecht 112, das hier beispielhaft schlauchförmig ausgeführt ist, in tangentialer Richtung umlaufend mit der Federkraft beaufschlagen kann. Möglich ist auch, dass das Drahtgeflecht 112 in zwei entgegengesetzten radialen Richtungen mit der Federkraft beaufschlagt wird, wie in Figur 3 veranschaulicht.

Das Federelement 114 kann rohrartig ausgeführt sein, wie beispielhaft in den Figuren 1a bis 2 gezeigt.

Es ist möglich, dass das Federelement 114 zwischen die Einzeldrähte 113 eingeschoben ist. Beispielsweise kann das Federelement 114 zumindest teilweise von den Einzeldrähten 113 umwickelt und/oder damit verflochten sein.

Beispielsweise kann das Federelement 114 als rohrförmiges Gittergeflecht 200 zum Beaufschlagen des Drahtgeflechts 112 mit der Federkraft ausgeführt sein, etwa ähnlich einem Stent (siehe Figur 2).

Alternativ kann das Federelement 114 als eine Blattfederanordnung aus mindestens zwei Blattfedern 300 ausgeführt sein (siehe Figur 3). Die Blattfedern 300 können dabei einander gegenüberliegend innerhalb des Drahtgeflechts 112 angeordnet sein und - wie weiter oben erwähnt - ausgebildet sein, um das Drahtgeflecht 112 in zwei entgegengesetzten radialen Richtungen mit der Federkraft zu beaufschlagen (angedeutet durch zwei entgegengesetzt gerichtete Pfeile).

Es ist möglich, dass in das Drahtgeflecht 112 mehr als ein Federelement 114 eingefügt ist. Beispielsweise können in und/oder an dem Drahtgeflecht 112 hintereinander mehrere Gittergeflechte 200 und/oder mehrere Blattfederanordnungen aus jeweils zwei Blattfedern 300 angeordnet sein, wie es in Figur 3 schematisch angedeutet ist.

Besonders vorteilhaft ist es, wenn das Federelement 114 bereits bei der Herstellung des Drahtgeflechts 112 in das Drahtgeflecht 112 eingefügt wird, d. h. von diesem umflochten und/oder in dieses eingeflochten wird. Anschließend können die beiden Enden des Drahtgeflechts 112 mit dem jeweiligen Kontaktelement 108 bzw. 110 elektrisch leitfähig verbunden werden.

Da es sich bei den vorangehend detailliert beschriebenen Vorrichtungen und Verfahren um Ausführungsbeispiele handelt, können die Vorrichtungen und Verfahren in üblicher Weise vom Fachmann in einem weiten Umfang modifiziert werden, ohne den Bereich der Erfindung zu verlassen. Insbesondere sind die mechanischen Anordnungen und die Größenverhältnisse der einzelnen Elemente zueinander lediglich beispielhaft.

### BEZUGSZEICHENLISTE

- 100: Batteriesystem
- 102: erstes Batteriemodul
- 104: zweites Batteriemodul
- 106: Batteriemodulverbinder
- 108: erstes Kontaktelement
- 110: zweites Kontaktelement
- 112: Drahtgeflecht
- 113: Einzeldraht
- 114: Federelement
- 116: Längsachse
- 200: Gittergeflecht
- 300: Blattfeder

## Patentansprüche

1. Batteriemodulverbinder (106) zum elektrisch leitfähigen Verbinden zweier Batteriemodule (102, 104), wobei der Batteriemodulverbinder (106) umfasst:
ein erstes Kontaktelement (108) zum elektrisch leitfähigen Kontaktieren eines ersten Batteriemoduls (102);
ein zweites Kontaktelement (110) zum elektrisch leitfähigen Kontaktieren eines zweiten Batteriemoduls (104);
ein bandförmiges Drahtgeflecht (112), das an seinem ersten Ende mit dem ersten Kontaktelement (108) und an seinem zweiten Ende mit dem zweiten Kontaktelement (110) elektrisch leitfähig verbunden ist; und
mindestens ein Federelement (114), das in einen Abschnitt des Drahtgeflechts (112) zwischen dem ersten Ende und dem zweiten Ende eingefügt ist und ausgebildet ist, um den Abschnitt derart mit einer Federkraft zu beaufschlagen, dass der Abschnitt radial zu einer Längsachse (116) des Drahtgeflechts (112) aufgedehnt wird.

2. Batteriemodulverbinder (106) nach Anspruch 1,
wobei das Federelement (114) als Rohr ausgeführt ist.

3. Batteriemodulverbinder (106) nach einem der vorhergehenden Ansprüche,
wobei das Federelement (114) ein rohrförmiges Gittergeflecht (200) zum Beaufschlagen des Abschnitts mit der Federkraft umfasst.

4. Batteriemodulverbinder (106) nach einem der vorhergehenden Ansprüche,
wobei das Federelement (114) zwei einander gegenüberliegend angeordnete Blattfedern (300) zum Beaufschlagen des Abschnitts mit der Federkraft umfasst.

5. Batteriemodulverbinder (106) nach einem der vorhergehenden Ansprüche,
wobei das Drahtgeflecht (112) schlauchförmig ausgeführt ist.

6. Batteriemodulverbinder (106) nach einem der vorhergehenden Ansprüche,
wobei mehrere Federelemente (114) in unterschiedliche Abschnitte des Drahtgeflechts (112) zwischen dem ersten Ende und dem zweiten Ende eingefügt sind und ausgebildet sind, um die unterschiedlichen Abschnitte derart mit einer Federkraft zu beaufschlagen, dass die unterschiedlichen Abschnitte radial zur Längsachse (116) des Drahtgeflechts (112) aufgedehnt werden.

7. Batteriesystem (100), umfassend:
mindestens ein erstes Batteriemodul (102) und ein zweites Batteriemodul (104);
mindestens einen Batteriemodulverbinder (106) nach einem der vorhergehenden Ansprüche, wobei das erste Batteriemodul (102) und das zweite Batteriemodul (104) über den Batteriemodulverbinder (106) elektrisch leitfähig miteinander verbunden sind.

8. Verfahren zum Herstellen eines Batteriemodulverbinders (106) nach einem der Ansprüche 1 bis 6, wobei das Verfahren umfasst:
Herstellen des bandförmigen Drahtgeflechts (112) durch Verflechten mehrerer Drähte (113), wobei das mindestens eine Federelement (114) beim Verflechten der Drähte (113) in das Drahtgeflecht (112) eingefügt wird; und
Elektrisch leitfähiges Verbinden des Drahtgeflechts (112) an seinem ersten Ende mit dem ersten Kontaktelement (108) und an seinem zweiten Ende mit dem zweiten Kontaktelement (110).

9. Verfahren nach Anspruch 8,
wobei das Federelement (114) zumindest abschnittweise von den Drähten (113) umflochten und/oder mit den Drähten (113) verflochten wird.

## Claims

1. Battery module connector (106) for electrically conductively connecting two battery modules (102, 104), wherein the battery module connector (106) comprises:
a first contact element (108) for electrically conductively contacting a first battery module (102);
a second contact element (110) for electrically conductively contacting a second battery module (104);
a strip-like wire mesh (112) which is electrically conductively connected at its first end to the first contact element (108) and at its second end to the second contact element (110); and
at least one spring (114) which is inserted into a section of the wire mesh (112) between the first end and the second end and is designed to apply a spring force to the section in such a way that the section is expanded radially in relation to a longitudinal axis (116) of the wire mesh (112).

2. Battery module connector (106) according to Claim 1,
wherein the spring element (114) is designed as a tube.

3. Battery module connector (106) according to either of the preceding claims,
wherein the spring element (114) comprises a tubular latticework (200) for applying the spring force to the section.

4. Battery module connector (106) according to one of the preceding claims,
wherein the spring element (114) comprises two leaf springs (300), which are arranged opposite each other, for applying the spring force to the section.

5. Battery module connector (106) according to one of the preceding claims,
wherein the wire mesh (112) is designed in the form of a sleeve.

6. Battery module connector (106) according to one of the preceding claims,
wherein a plurality of spring elements (114) are inserted into different sections of the wire mesh (112) between the first end and the second end and are designed to apply a spring force to the different sections in such a way that the different sections are expanded radially in relation to the longitudinal axis (116) of the wire mesh (112).

7. Battery system (100) comprising:
at least one first battery module (102) and one second battery module (104);
at least one battery module connector (106) according to one of the preceding claims, wherein the first battery module (102) and the second battery module (104) are electrically conductively connected to each other by means of the battery module connector (106).

8. Method for producing a battery module connector (106) according to one of Claims 1 to 6, wherein the method comprises:
producing a strip-like wire mesh (112) by interweaving a plurality of wires (113), wherein the at least one spring element (114) is inserted into the wire mesh (112) during interweaving of the wires (113); and
electrically conductively connecting the wire mesh (112) at its first end to the first contact element (108) and at its second end to the second contact element (110).

9. Method according to Claim 8,
wherein the spring element (114) is overwoven by the wires (113) and/or interwoven with the wires (113) at least in sections.

## Revendications

1. Connecteur de module de batterie (106) permettant de relier de manière électriquement conductrice deux modules de batterie (102, 104), le connecteur de module de batterie (106) comprenant :
un premier élément de contact (108) pour la mise en contact électriquement conductrice d'un premier module de batterie (102) ;
un deuxième élément de contact (110) pour la mise en contact électriquement conductrice d'un deuxième module de batterie (104) ;
un treillis métallique en forme de bande (112) qui est au niveau de sa première extrémité relié de manière électriquement conductrice au premier élément de contact (108) et au niveau de sa deuxième extrémité au deuxième élément de contact (110) ; et
au moins un élément faisant ressort (114) qui est inséré dans une partie du treillis métallique (112) entre la première extrémité et la deuxième extrémité et est réalisé pour appliquer une force de ressort à la partie de telle sorte que la partie est dilatée radialement par rapport à un axe longitudinal (116) du treillis métallique (112).

2. Connecteur de module de batterie (106) selon la revendication 1, dans lequel l'élément faisant ressort (114) est réalisé sous forme de tube.

3. Connecteur de module de batterie (106) selon l'une quelconque des revendications précédentes, dans lequel l'élément faisant ressort (114) comprend un grillage tubulaire (200) pour appliquer la force de ressort à la partie.

4. Connecteur de module de batterie (106) selon l'une quelconque des revendications précédentes, dans lequel l'élément faisant ressort (114) comprend deux ressorts à lames (300) disposés à l'opposé l'un de l'autre pour appliquer la force de ressort à la partie.

5. Connecteur de module de batterie (106) selon l'une quelconque des revendications précédentes, dans lequel le treillis métallique (112) est réalisé en forme de tuyau souple.

6. Connecteur de module de batterie (106) selon l'une quelconque des revendications précédentes, dans lequel plusieurs éléments faisant ressort (114) sont insérés dans différentes parties du treillis métallique (112) entre la première extrémité et la deuxième extrémité et sont réalisés pour appliquer une force de ressort aux différentes parties de telle sorte que les différentes parties sont dilatées radialement par rapport à l'axe longitudinal (116) du treillis métallique (112).

7. Système de batterie (100), comprenant :
au moins un premier module de batterie (102) et un deuxième module de batterie (104) ;
au moins un connecteur de module de batterie (106) selon l'une quelconque des revendications précédentes, dans lequel le premier module de batterie (102) et le deuxième module de batterie (104) sont reliés l'un à l'autre de manière électriquement conductrice par l'intermédiaire du connecteur de module de batterie (106) .

8. Procédé de fabrication d'un connecteur de module de batterie (106) selon l'une quelconque des revendications 1 à 6, le procédé comprenant les étapes consistant à :
fabriquer le treillis métallique (112) en forme de bande par tressage de plusieurs fils métalliques (113), dans lequel ledit au moins un élément faisant ressort (114) est inséré dans le treillis métallique (112) lors du tressage des fils métalliques (113) ; et
relier de manière électriquement conductrice le treillis métallique (112), au niveau de sa première extrémité, au premier élément de contact (108), et au niveau de sa deuxième extrémité au deuxième élément de contact (110).

9. Procédé selon la revendication 8, dans lequel les fils métalliques (113) sont tressés autour de l'élément faisant ressort (114) au moins par endroits et/ou l'élément est tressé avec les fils métalliques (113).
